## Europäisches Patentamt
## European Patent Office
## Office européen des brevets

(19)

(11) Publication number: **0 229 199**
**B1**

(12) **EUROPEAN PATENT SPECIFICATION**

(45) Date of publication of the patent specification:
31.10.90

(51) Int. Cl.⁵: **C02F 3/10, B01D 53/18**

(21) Application number: **85309172.6**

(22) Date of filing: **17.12.85**

(54) **Film-flow packing for biological treatment of fluids.**

(43) Date of publication of application:
**22.07.87 Bulletin 87/30**

(45) Publication of the grant of the patent:
**31.10.90 Bulletin 90/44**

(84) Designated Contracting States:
**AT DE FR GB NL SE**

(56) References cited:
**EP-A- 0 117 076**
**GB-A- 1 106 566**

**The file contains technical information submitted after the application was filed and not included in this specification**

(73) Proprietor: **H-PANNONPLAST Müanyagipari Vallalat, Nagytetenyi ut 216/218, H-1225 Budapest XXII(HU)**

(72) Inventor: **Ragacs, Laszlo, Gogany u. 11, H-6600 Szentes(HU)**
Inventor: **Nadudvari, Jozsef, Koszta J. u. 10, H-6600 Szentes(HU)**

(74) Representative: **Gold, Tibor Zoltán et al, T.Z.GOLD & COMPANY 9, Staple Inn, London WC1V 7QH(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to film-flow packing for the biological treatment of fluids, comprising a series of plates provided with concave and convex ribs, wherein inclined channels with corrugated sides are formed at an angle between the adjacent plates packed together.

As is known, the quality of water depends on its physical, chemical and biological properties. The preservation of the quality of water and the adequate purification of the sewage waters have become a central problem of environmental protection in recent years.

The various known technologies of water and sewage purification include physical, chemical and biological processes. In a known biological process, so-called drip bodies are used in the primary purification phase of mainly multiphase sewage water purification technologies. Their application enables one to carry out active sludge biological purification technology at higher efficiency.

The packing of the biological drip bodies contains various materials, but nearly exclusively plastic packings are used today. The packing arranged on top of each other to build up a tower of drip bodies with a water distributor on top of the tower.

According to the principle of operation of biological drip bodies the waste or sewage water flows down intermittently or continuously on the biological film developing on the surface of packings. This brings about coagulation and absorption of the pollutant, in the course of which the microorganic culture forming the biological film dissolves the solute in the water and utilizes it for gaining energy and for cell synthesis. The excess biological film portions agglomerate in a settling vessel, or dissociate by way of the enzyme activity of the microorganisms outside the cells into a material which diffuses through the cell wall and thus participates in the metabolic process.

The oxygen required for biochemical oxidation is supplied by the air passing through the packing. The $BOI_5$ value of the waste water diminishes exponentially as it flows down in the drip body.

Thus the packings used in the biological drip bodies must meet several requirements:

Related to a unit volume of the packings, the surface that may be covered by the biological film has to be as large as possible. At the same time, the voids volume must also be large in the packing to have sufficient free cross-section for the filmy downflow of the waste water; and adequate oxygen supply should be available.

In addition, packings have to be resistant against chemical, biological and physical effects and they must possess adequate statical strength in order that the biological film should be able to carry the weight of water and several packing units arranged on each other.

Further obvious requirements are the easy, simple and fast production of the packings, as well as their fast and simple assembly, operation and maintenance.

In the spririt of the above efforts several constructional solutions are known. One of the most familiar variants is described in GB-A 1 065 612 and GB-A 1 080 991, wherein the elements are plastic sheets with a straight or curved generatrix and an accordion-like corrugated surface. These are generally arranged alternately with flat sheets so that the elements are turned to face each other.

The fundamental shortcoming of these known constructions is that as a result of using flat sheets to increase the mechanical strength, the specific surface is relatively small: 85 $m^2/m^3$, which results in relatively poor efficiency.

In another known construction, the packing consists of sheets corrugated in strips, and the sheets are provided with reticular reinforcing elements at the top and bottom. Here there is no closed channel system and through the specific surface area is larger than that of the earlier mentioned solutions, the mechanical load-bearing capacity of the packing is low.

In DE-B 1 299 665 a packing is described which also consists of sheets folded in an accordion-like manner. The corrugations of the adjacent sheets intersect each other and the sheets are made of moisture-absorbing material. The specific surface area of the elements is relatively small, their mechanical strength is low, and they are unsuitable for use in biological drip bodies.

From DD-A 58 104 a drip body is known which consists of trapezoidal corrugated sheets. Flat sheets are arranged between the corrugated sheets which have oblong slots in them. The specific surface area is small, the mechanical strength is inadequate and the field of application is mainly in contacting liquids with gases.

The plastic packing described in HU-B 172 169 represents definite progress compared to the above known solutions. This packing is provided with corrugated through-going channels mutually separated from each other, where the channels are of regular hexagonal cross-section in any horizontal section of at least one part of the packing. The longitudinal axes of the channels in the vertical plane at least partly consist of sequentially opposite sections and preferably two adjacent sides of each channel are provided with corrugations in a direction transverse to the longitudinal axis.

This construction enables an increase in the specific surface area to 135 $m^2/m^3$ and yields very good results. However, it has two fundamental drawbacks. Firstly, the sheets forming the packing are assembled with the use of adhesive. This is expensive, for it requires filler material and further auxiliary devices for assembly; moreover, the gluing technology involves the risk of accidents, since the applied solvents are toxic and represent fire and explosion hazards.

Secondly, the longitudinal axes of the channels are at a relatively wide angle of 30–50° to the vertical. Thus as a result of gravitation the water flows only at the lower part of the channels during operation. This means that, especially when there is a heavy surface load, the actual surface area participating in intensive purification may be reduced to 50% of the total surface area. Hence the operation of these packing units is flexible with changing of load only in a relatively narrow range.

Clogging, flooding or formation of standing pools or other failures of the packing requiring repair and maintenance frequently occur even during the most careful operation of the biological drip bodies. The jointing of the sheets with an adhesive is unfavourable in this respect also, for then the sheets cannot be separately replaced, and cleaning and maintenance are difficult.

The present invention aims to reduce the described deficiencies and to provide a plastic packing particularly for biological drip bodies which is exposable to heavy loads the production, assembly, repair and maintenance of which are inexpensive, fast and simple, and which has a large specific surface area affording more efficient and economical operation.

Therefore, the plastic packing according to the present invention is formed from a series of sheets provided with convex and concave ribs, with inclined channels having corrugated sidewalls being formed between the ribs of adjacent channels. The essence of the packing according to the invention is as set forth in the characterising part of claim 1.

In the packing according to a preferred embodiment of the invention the sheets are jointed without the use of adhesives. The M-profiles may be flat or at least partly curved surfaces.

The join lines and centre lines of the M-profiles may be at 5° to the vertical.

The ribbed surface is preferably formed by M-profiles or alternately M and V-profiles, where the jointing lines and centre lines of the profiles consisting of flat sheets are horizontal.

In given case the profile may be rounded at their tips and joints of the legs. The tips and legs are preferably at an angle of approximately 90°.

The length of the upper branches of the M-profiles forming the sheets is 1–200 mm, preferably 2 mm. The width of the flat strips at their edges is similarly 1–200 mm, preferably 3 mm. The length of the legs is 10–200 mm, preferably 25 mm.

The height of the M and/or V-profiles forming the ribbed surface is 2–16 mm, preferably 5 mm. The angle between the profile legs is preferably 60°.

The length and width of the sheets forming the packing are preferably 500–3000 mm; the size of the sheets in a practical construction is 500 × 1000 mm.

According to an embodiment of the invention the sheets forming the packing are jointed opposite each other so that legs of the M-profiles end in a point of junction. According to another version the sheets are turned in the same direction, jointed to each other and offset at a distance of 1/2 M-profile so that the shanks of M-profiles on one sheet fit into the through on the upper part of M-profiles on the adjacent sheet.

The plastic sheets forming the packing may be made of polyethylene, polystyrene, polypropylene, polyvinyl chloride or hard polyethylene foil with vacuum moulding.

The fundamental advantage of the plastic packing according to the invention is that its specific surface area can be increased even to 500 $m^2/m^3$, which is a multiple of the best of the hitherto known constructions. Its operation is flexible even under high hydraulic, or surface loads, thus the amount of packing material employed for a given capacity can be reduced by 30–40%.

Two types of packing can be constructed from the uniformly shaped plastics sheets, according to whether the sheets are jointed by turning them to face in the same direction or oppositely to each other. The sheets interengage in a dovetail fashion so that gluing is unnecessary. At the same time, for cleaning or in case of failure the sheets are easily dismantled and each sheet can be separately replaced.

The voids volume is large and the angular inclination of the channels to the vertical is small, which ensure ample and efficient air supply. Owing to the special formation of the sheet tips, the statical strength is very good, the structure has adequate mechanical load-bearing capacity.

The plastic sheets forming the packing according to the invention can be produced simply, quickly and in any desired size, and their production technology is adapted to conventional technology.

The invention is decribed, by way of example only, with reference to the accompanying drawings, in which:

Figure 1 is a side view of a plastic sheet for forming a packing according to the invention;

Figure 2 is a section taken on the plane indicated by the lines A–A in Figure 1;

Figure 3 is a section taken on the plane indicated by the lines B–B shown in Figure 2;

Figure 4 is a cross-section similar to Figure 3 but showing a variant;

Figure 5 is a cross-section similar to Figure 3 but showing a further variant;

Figure 6 is a top plan view of an alternative embodiment of packing according to the invention, assembled from sheets, and

Figure 7 is a top plan view of a further alternative embodiment of packing according to the invention, assembled from sheets.

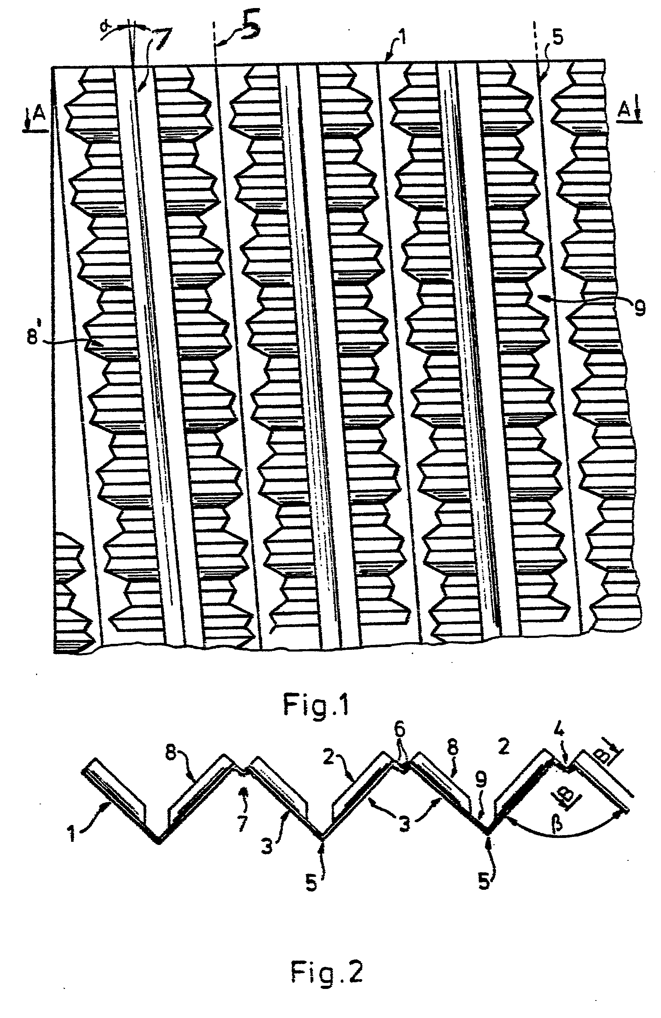

As shown in Figures 1 to 3, a sheet 1 consists of repeated M-profiles 2. In what follows, the terminology to describe the M shape will be to call the longer, outside limbs of the M "legs" while the shorter, inner sections which together form a V-shape will be called "stems". The legs 3 of each M profile are inclined to the vertical and are joined to the like legs 3 of an adjacent M-profile along a so-called join line 5 which runs orthogonally to the plane of the M. The stems 6 forming a V or trough 4 at the centre of the M-profile 2 are joined along a so-called centre line 7 which also runs orthogonally to the plane of the M. These lines 5 and 7 are parallel with each and are at an angle $\alpha$ to the vertical. In this embodiment, $\alpha = 5°$, the length of the legs 3 of the M-profiles is 25 mm, and the length of the stems 6 is 5 mm. The included angle $\beta$ between the legs 3 is 90°.

The surface of each leg 3 is ribbed, i.e. the ribs 8 extend in the plane of the legs 3. The length of the ribs 8 is unequal, in the manner shown in Figure 1. The ribbed surface 8' does not take up the full length of legs 3, thus there are flat areas forming ribless strips 9 in the vicinity of join line 5. The minimum width of each strip is 5 mm from the join line 5.

The ribbed surface 8' is formed by alternately juxtaposed M-profiles 10 and inverted V-profiles 11. In this embodiment, the height of the M-profiles 10 is 3 mm, and the included angle γ between the legs is 60°.

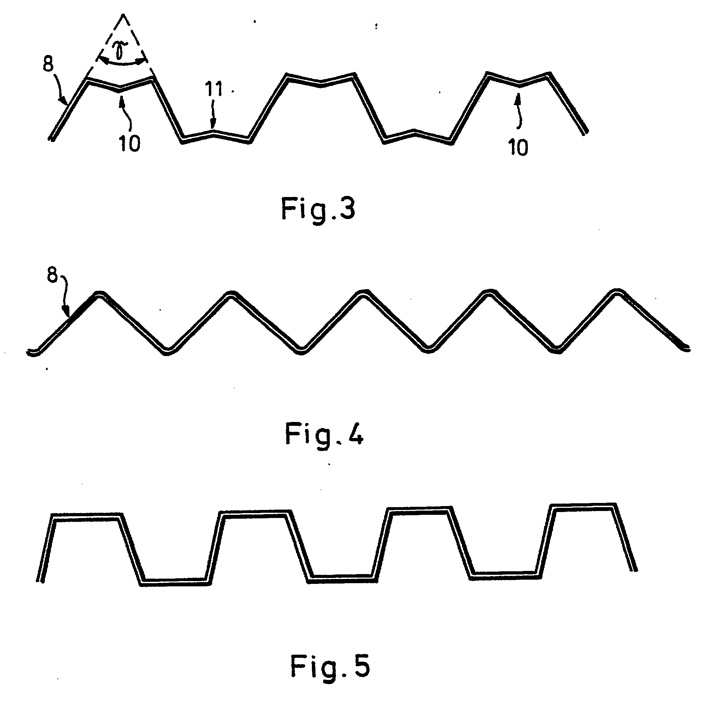

In the alternative embodiment of the ribbefd surface 8' shown in Figure 4, the ribbed surface 8' consists of alternate V-profiles and inverted V-profiles turned opposite each other, while the embodiment of the ribbed surface 8' according to Figure 5 discloses rib profiles which are trapezoidal.

The packing according to the invention may be produced with sheets 1 in several versions.

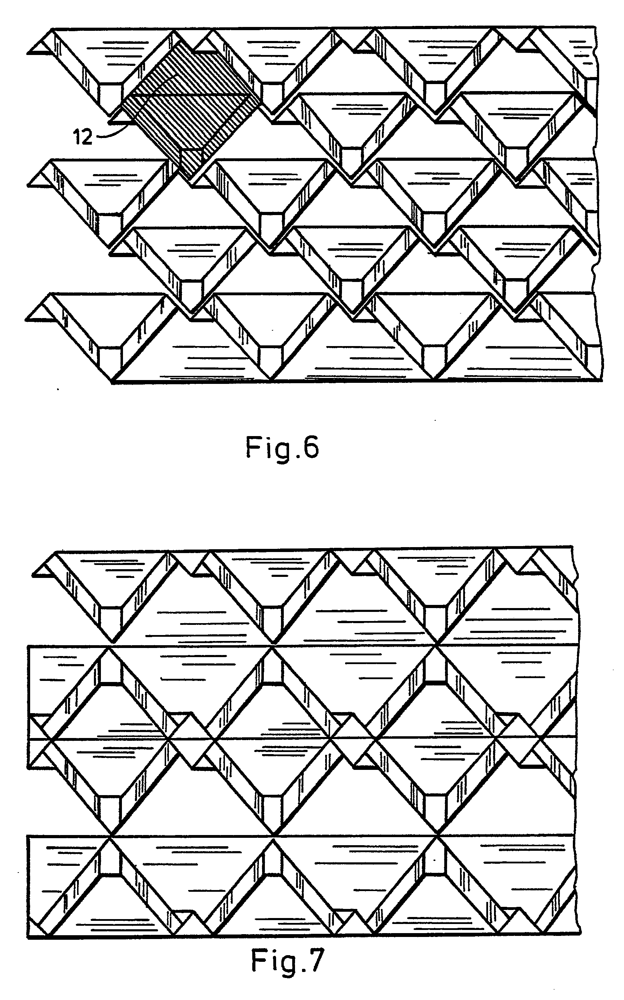

In the embodiment shown in Figure 6 sheets 1 are oriented in the same direction, but are secured to each other with adjacent sheets offset by one-half of the "pitch" of each M-profile 2. This is made possible by the fact that the angle included between the legs 3 is the same as the angle included between the stems 6; thus parts of the legs 3 of one sheet 1 fit into the trough 4 defined by the stems 6 of the adjacent sheet 1.

Channels 12 of generally square or rhomboidal cross-section result in this way in the packing of closed section and this is shown by dense shading for one channel: only the trough 4 formed by the steps 6 is missing from each full square or rhomboid.

The surface area per unit volume of the packing of closed section shown in Figure 6 is very large, even 500 m²/m³ may be attained.

The embodiment shown in Figure 7 also has a relatively large specific surface area, through smaller than that of the Figure 6 embodiment. Here adjacent sheets 1 are joined together back-to-back so that junction points between adjacent sheets result, in the horizontal section, at the juxtaposed join lines 5 and at the juxtaposed line separating the legs 3 and stems 6.

Since in this case the join lines 5 and centre lines 7 on the sheets 1 are opposite each other, no closed section exists here.

The specific surface area of packings assembled with sheets as shown in Figure 6 or 7 is several times larger than that of known packings, and the relatively narrow angle α of the channels to the vertical results partly in high stability and partly in optimal operation. The waste water is intensively purified on both sides of the sheets under varying or impulse-like surface loads, consequently the construction is flexible against any change in the surface load.

The flow velocity of the water on the sheets is controlled by the ribbed surfaces 8'. This surface facilitates adhesion of the biological film and increases the specific surface area.

Thus the packing according to the invention increases the efficiency of the biological drip bodies, while the amount of packing is reduced by 30–40 % and the cost of production and operation is reduced by about 40–50%.

Although only some embodiments have been described and illustrated, other embodiments may be produces, based on similar principle. Thus the sizes and shapes of M and V-profiles may vary. The corrugated ribbed surface may differ from the illustrated one, and the tips at the junctions of the profiles, or within the profiles themselves may be rounded rather than sharp. All these variations do not change the essential advantage of the invention, namely the stable assembly and disassembly of the sheets without the use of adhesive, the reduced cost of production and operation, and increased efficiency.

The sheets 1 may be made of any synthetic foil, e.g. polyethylene, polystyrene, polypropylene, polyvinyl chloride, hard polyethylene, etc.

Throughout this description and claims, the phrase "M-profile" is intended to cover also "W-profile" since the question of whether a profile is M-shaped or W-shaped is merely a question of spatial orientation.

## Claims

1. Packing for use in the biological treatment of fluids, comprising a series of vertical juxtaposed sheets (1) fixed together, each sheet (1) being provided with ribbing (8) and having regularly repeated profiled sections (2), wherein liquid flow channels (12) having a longitudinal axis inclined to the vertical and having ribbed side-walls are formed between the juxtaposed sheets (1), characterised in that each sheet (1) is formed with a plurality of interconnected M-profiles (2), the join lines (5) of consecutive M-profiles (2) and the bisecting centre lines (7) of each M-profile (2) are unbroken along the full height of the packing and are at an angle (α) of maximum 30° to the vertical; further characterised in that the corrugated side walls are formed as a ribbed surface (8') only on parts of the legs (3) of the M-profiles (2) in such a manner that flat, unribbed, strip-like areas (9) of said side walls are disposed on both sides of the said join lines (5) of the M-profiles (2).

2. Packing as claimed in claim 1, characterised in that the sheets (1) are jointed to each other without the use of adhesive.

3. Packing as claimed in claim 1 or 2, characterised in that said angle (α) is substantially 5°.

4. Packing as claimed in any preceding claim, characterised in that the said ribbed surface (8') is formed by consecutive M-profiles (10) and inverted V-profiles (11) (Figures 3), or by consecutive upright and inverted V-profiles (Figure 4), or by consecutive upright and inverted trapezoidal profiles (Figure 5).

5. Packing as claimed in any preceding claim, characterised in that the profiles (2, 10, 11) are rounded at their join lines and at their centre lines of bisection.

6. Packing as claimed in any preceding claim, characterised in that the sheets (1) are oriented in the same direction, but adjacent sheets are mutually offset by a distance equal to one-half of the M-profile (2) so that the legs (3) of the M-profiles (2) of one of the sheets (1) lie in a trough (4) formed by the stemps (6) (as herein defined) of the M-profiles (2) of the adjacent sheet (1). (Figure 6)

7. Packing as claimed in any of claims 1 to 5, characterised in that sheets (1) are oriented back-to-back relative to each other so that the legs (3) of the M-profiles (2) meet at points of junction in the horizontal section. (Figure 7)

8. Packing as claimed in any preceding claim, characterised in that the angle ($\beta$) included between the legs (3) of a given M-profile is between 0–178°, preferably substantially 90°.

9. Packing as claimed in any preceding claim, characterised in that the length of the stem (6) of each M-profile (2) is 1–200 mm, preferably substantially 2 mm.

10. Packing as claimed in any preceding claim, characterised in that length of the leg (3) of each M-profile (2) is 10–200 mm, preferably substantially 25 mm.

11. Packing as claimed in any preceding claim, characterised in that the width of each said flat, strip-like area (9) is 1–200 mm, preferably substantially 3 mm.

12. Packing a claimed in claim 4 or any claim appendant thereto, characterised in that height of the said M and/or V-profile (10, 11) is 2–16 mm, preferably substantially 5 mm.

13. Packing as claimed in claim 12, characterised in that the angle ($\gamma$) between the legs (3) of said M-profiles (10) is 0–178°, preferably substantially 60°.

14. Packing as claimed in any preceding claim, characterised in that the length of each sheet (1) is 500–3000 mm.

15. Packing as claimed in claim 14, characterised in that size of the sheets (1) is substantially 500 × 1000 mm.

## Patentansprüche

1. Packung für die Verwendung bei der biologischen Behandlung von Flüssigkeiten mit einer Reihe von miteinander verbundenen, vertikal übereinanderliegenden Bahnen (1), die jeweils mit einer Rippung (8) versehen sind und regelmäßig aufeinanderfolgende, profilierte Abschnitte (2) haben und Kanäle (12) für die Flüssigkeitsströmung mit einer gegenüber der Vertikalen geneigten Längsachse und mit gerippten Seitenwänden zwischen den übereinanderliegenden Bahnen (1) gebildet werden, dadurch gekennzeichnet, daß jede Bahn (1) mit mehreren, miteinander verbundenen M-Profilen (2) versehen ist, die Verbindungslinie (5) aufeinanderfolgender M-Profile (2) und die unterteilende Mittellinie (7) jedes M-Profiles (2) entlang der gesamten Höhe der Packung ungebrochen sind und einen Winkel ($\alpha$) von maximal 30° zur Vertikalen haben, daß weiters die gerippten Seitenwände als gerippte Oberfläche (8′) nur an Teilen der Schenkel (3) der M-Profile (2) derart ausgebildet sind, daß ebene, ungerippte, streifenartige Bereiche (9) an diesen Seitenwänden zu beiden Seiten der Verbindungslinien (5) der M-Profile (2) angeordnet sind.

2. Packung nach Anspruch 1, dadurch gekennzeichnet, daß die Bahnen ohne Verwendung von Kleber miteinander verbunden sind.

3. Packung nach Anspruch 1 oder 2, dadurch gekennzeichnet, daß der Winkel ($\alpha$) im wesentlichen 5° ist.

4. Packung nach einem der vorhergehenden Ansprüche, dadurch gekennzeichnet, daß die gerippte Oberfläche (8′) durch aufeinanderfolgende M-Profile (10) und verkehrt stehende V-Profile (11) (Fig. 3), oder durch aufeinanderfolgende, aufrechte und verkehrt stehende V-Profile (Fig. 4) oder durch aufeinanderfolgende, aufrechte und verkehrt stehende Trapezoidprofile (Fig. 5) gebildet ist.

5. Packung nach einem der vorhergehenden Ansprüche, dadurch gekennzeichnet, daß die Profile (2, 10, 11) an ihren Verbindungslinien und an ihren Halbierungsmittellinien abgerundet sind.

6. Packung nach einem der vorhergehenden Ansprüche, dadurch gekennzeichnet, daß die Bahnen (1) in der gleichen Richtung ausgerichtet sind, jedoch benachbarte Bahnen gegenseitig um einen Abstand versetzt sind, der eine Hälfte des M-Profiles (2) gleich ist, so daß die Schenkel (3) der M-Profile (2) einer Bahn (1) in einer Senke (4) liegen, die durch die Stege (6) (wie hier definiert) der M-Profile (2) der benachbarten Bahn (1) gebildet sind (Fig. 6).

7. Packung nach einem der Ansprüche 1 bis 5, dadurch gekennzeichnet, daß Bahnen (1) zueinander Rücken an Rücken ausgerichtet sind, so daß die Schenkel (3) der M-Profile (2) sich an Verbindungspunkten in den horizontalen Abschnitten (Fig. 7) treffen.

8. Packung nach einem der vorhergehenden Ansprüche, dadurch gekennzeichnet, daß der Winkel ($\beta$) zwischen den Schenkeln (3) eines gegebenen M-Profiles zwischen 0 und 178°, vorzugsweise im wesentlichen bei 90°, liegt.

9. Packung nach einem der vorhergehenden Ansprüche, dadurch gekennzeichnet, daß die Länge der Stege (6) jedes M-Profiles (2) 1–200 mm, vorzugsweise im wesentlichen 2 mm, ist.

10. Packung nach einem der vorhergehenden Ansprüche, dadurch gekennzeichnet, daß die Länge des Schenkels (3) jedes M-profiles (2) 10–200 mm, vorzugsweise im wesentlichen 25 mm, ist.

11. Packung nach einem der vorhergehenden Ansprüche, dadurch gekennzeichnet, daß die Breite jedes der ebenen, streifenartigen Bereiche (9) 1–200 mm, vorzugsweise im wesentlichen 3 mm, ist.

12. Packung nach Anspruch 4 oder irgendeinem davon abhängigen Anspruch, dadurch gekennzeichnet, daß die Höhe dieser M- und/oder V-Profile (10, 11) 2–16 mm, vorzugsweise im wesentlichen 5 mm, ist.

13. Packung nach Anspruch 12, dadurch gekennzeichnet, daß der Winkel ($\gamma$) zwischen den Schenkeln (3) der M-Profile (10) 0–178°, vorzugsweise im wesentlichen 60°, hat.

14. Packung nach einem der vorhergehenden Ansprüche, dadurch gekennzeichnet, daß die Länge jeder Bahn (1) 500–3000 mm ist.

15. Packung nch Anspruch 14, dadurch gekennzeichnet, daß die Größe der Bahn (1) im wesentlichen 500 × 1000 mm ist.

## Revendications

1. Garnissage pour le traitement biologique des fluides, comprenant une série de feuilles (1) juxtaposées verticalement et fixées ensemble, chaque feuille (1) étant pourvue de nervures (8) et présentant des sections (2) à profil répété régulièrement, dans lequel des canaux d'écoulement (12) de liquide présentant un axe longitudinal incliné par rapport à la verticale et présentant des parois nervurées sont formés entre les feuilles (1) juxtaposées, caractérisé en ce que chaque feuille (1) est formée de plusieurs profils (2) en M interconnectés, et que les lignes de jointure (5) de profils en M consécutifs et les lignes centrales (7) de chaque profil (2) en M qui se rencontrent, ne sont pas brisées sur toute la longueur du garnissage et forment un angle (α) de 30° maximum par rapport à la verticale; garnissage caractérisé également en ce que les parois ondulées sont formées en surface nervurée (8') seulement sur des parties des pattes (3) des profils en M (2) de sorte que des zones (9) plates, sans nervures, en bandes, desdites parois soient disposées sur les deux côtés desdites lignes de jointure (5) des profils en M (2).

2. Garnissage selon la revendication 1, caractérisé en ce que les feuilles (1) sont assemblées sans faire usage d'adhésif.

3. Garnissage selon la revendication 1 ou 2, caractérisé en ce que ledit angle (α) est sensiblement de 5°.

4. Garnissage selon une quelconque des revendications précédentes, caractérisé en ce que ladite surface nervurée (8') est formée par des profils (10) en M consécutifs et par des profils (11) en V inversés, ou par des profils en V consécutifs droits et inversés, ou par des profils en forme de trapèze, consécutifs droits et inverses.

5. Garnissage selon une quelconque des revendications précédentes, caractérisé en ce que les profils (2, 10, 11) sont arrondis à leurs lignes de jointure et à leurs lignes centrales de rencontre.

6. Garnissage selon une quelconque des revendications précédentes, caractérisé en ce que les feuilles (1) sont orientées dans la même direction, mais en ce que les feuilles adjacentes sont décalées les unes par rapport aux autres d'une distance égale à un demi profil en M (2) de sorte que les pattes (3) des profils en M (2) d'une des feuilles (1) s'étendent dans un creux (4) formé par les jambages (6) (comme ils sont définis ici) des profils en M (2) de la feuille adjacente (1).

7. Garnissage selon une quelconque des revendications 1 à 5, caractérisé en ce que les feuilles (1) sont orientées dos à dos de sorte que les pattes (3) des profils en M (2) se rencontrent en des points de jonction situés dans la section horizontale.

8. Garnissage selon une quelconque des revendications précédentes, caractérisé en ce que l'angle (β) inclus entre les pattes (3) d'un profil en M donné est compris entre 0 et 178°, et vaut, de préférence, sensiblement 90°.

9. Garnissage selon une quelconque des revendications précédentes, caractérisé en ce que la longueur des jambages (6) de chaque profil en M (2) est de 1 à 200 mm, et vaut, de préférence, sensiblement 2 mm.

10. Garnissage selon une quelconque des revendications précédentes, caractérisé en ce que la longueur des pattes (3) de chaque profil en M (2) est de 10 à 200 mm, et vaut, de préférence, sensiblement 25 mm.

11. Garnissage selon une quelconque des revendications précédentes, caractérisé en ce que la largeur de chacune desdites zones plates, en bande (9) est de 1 à 200 mm, et vaut, de préférence, sensiblement 3 mm.

12. Garnissage selon la revendication 4 ou l'une quelconque des revendications s'y rapportant, caractérisé en ce que la hauteur desdits profils en M et/ou en V (10, 11) est de 2 à 16 mm, et vaut, de préférence, sensiblement 5 mm.

13. Garnissage selon la revendication 12, caractérisé en ce que l'angle (γ) compris entre les pattes (3) desdits profils en M (10) est de 0 à 178°, et vaut, de préférence, sensiblement 60°.

14. Garnissage selon une quelconque des revendications précédentes, caractérisé en ce que la longueur de chaque feuille (1) est de 500 à 3000 mm.

15. Garnissage selon la revendication 14, caractérisé en ce que la dimension des feuilles (1) est sensiblement de 500 x 1000 mm.

Fig.1

Fig.2

Fig.3

Fig.4

Fig.5

Fig.6

Fig.7